Europäisches Patentamt

European Patent Office

Office européen des brevets

(19)

(11) Publication number: **0 200 569**

**A2**

(12) # EUROPEAN PATENT APPLICATION

(21) Application number: 86303380.9

(22) Date of filing: 02.05.86

(51) Int. Cl.⁴: **G 06 F 15/06**

(30) Priority: 03.05.85 US 730708

(43) Date of publication of application:
05.11.86 Bulletin 86/45

(84) Designated Contracting States:
AT BE CH DE FR GB IT LI LU NL SE

(71) Applicant: ADVANCED MICRO DEVICES, INC.
901 Thompson Place P.O. Box 3453
Sunnyvale, CA 94088(US)

(72) Inventor: Venkatraman, Chandrasekar
1235 Wildwood Avenue Apt. 393
Sunnyvale California(US)

(74) Representative: Wright, Hugh Ronald et al,
Brookes & Martin 52/54 High Holborn
London WC1V 6SE(GB)

(54) Monolithic integrated circuit device.

(57) A monolithic integrated circuit chip having a single on-chip control element and a plurality of data processors, all processor concurrently executing identical data-independent processing steps under the control of the on-chip control element. In an alternative embodiment, delay elements are placed in the control lines between the control element and the data-processors. In the case of multi-channels each carrying a time slot of a time-division-multiplexed signal, the processor for each channel may begin executions without waiting for arrival of data for the channels corresponding to later time slots. In a second alternative embodiment, a set of small custom control elements augment the single central control affording a limited amount of data-dependent processing for each data-processor.

EP 0 200 569 A2

Croydon Printing Company Ltd.

## MONOLITHIC INTEGRATED CIRCUIT DEVICE

This invention relates to electronic signal processing circuits for processing a plurality of signals concurrently, and more particularly, to a monolithic integrated circuit device having a single on-chip element controlling a plurality of on-chip signal processors.

Parallel processing of time-division multiplexed (TDM) signals is a common concern in the telecommunication field. For example, a number of coder-decoders (CODECs) such as eight, may be incorporated onto a single monolithic integrated circuit chip, so that a number of time-multiplexed communication signals may be processed simultaneously. In this way, an eight-fold increase in throughput speed will be achieved over the time it would take to process the signals strictly sequentially by a single CODEC.

In this illustration, the signal processing performed by each CODEC is (i) identical with that performed by all the other CODECs, and (ii) data-independent, in the sense that the steps executed by each CODEC are straight-line code with no data-dependent decision steps.

Conditions (i) and (ii) are quite prevalent in telecommunications applications where a number of channels, each with its own signal processor, results in the inefficient use of the individual signal processors each having its own control element. On a typical monolithic integrated circuit employing a number of processors, 25% of the die area is used for wire interconnections, 40% for the actual data processing circuitry and 35% for the control elements.

To avoid this duplication of control elements in multi-channel applications, and thereby reduce the area requirement for control elements from 35% to a much smaller percentage, the prior art has employed time-shared signal processors. However, such time-sharing requires operation of the processor at ever-increasing speeds, until an inherent upper limit is reached. Beyond this point, dual, quad, octuple processors are employed on a single chip to further increase throughput speed. But due to die area limitations, even this approach reaches an inherent upper limit. Furthermore, each processor has its own control element, thereby unnecessarily using valuable die area, and imposing excessive design requirements, especially in the area of computer-aided design (CAD).

The present invention concerns a single monolithic integrated circuit employing a multiple-intelligence, single-control (MISC) concept to save nearly 35% in die area with no compromise in throughput speed. Unlike time-shared processors, only the inherent speed of the processor imposes upper limit on the speed at which the device may be run rather than the limit imposed by effectively reducing the throughout speed for any one channel imposed by time-sharing.

Central to the MISC concept is the recognition that any application for which condition (i) and (ii) hold, may employ a single on-chip element controlling a large number of on-chip processors operating in parallel and performing the same data-independent steps. True parallel operation means that the speed-limitations of time-sharing are not implicated and the use of a single control element means that almost all the 35% die area used by having a number of individual control elements will be available for the actual processing of signals.

Furthermore, employment of only a single control results in greater reliability than a number of error-prone control elements. Both hardware and software faults are much less likely to occur with the MISC approach. Additionally CAD costs are reduced by using only a single control element.

An alternative "systolic" embodiment using the MISC approach involves using a delay element in the control circuit connecting each processor to the central control element. In this embodiment, the program executed by the control element would be run against the data in each TDM channel in a time-staggered manner. The time delay is chosen for each processor so that the program is run just as soon as the data in the time-division slot becomes available, thereby not having to wait to execute the program on the data in the first channel until the data in the last channel becomes available.

A second alternative embodiment permits a certain amount of "customizing" of the control for each processor by appending a small individualized control element which influences only the processor to which it is directly connected. In the way, the bulk of the central control element need not be duplicated for each channel, only that small fraction which is designed expressly for the special needs of the channel. The 35% saving in die area would therefore be only slightly reduced in this variant while a corresponding flexibility is added.

The instant MISC invention has possible application in the parallel processing of pixel information in digital graphics, in dual tone, multi-frequency (DTMF) detector and generator applications, in integrated service, digital network (ISDN) applications which involve software protocol processing cyclic redundancy code (CRC) generation and detection, and in the fast fourier transforms (FFT's) of a radar installation in which vast amounts of incoming data are sliced and processed within channels. And in a variety of multi-channel applications in which signal processing which would have heretofore been too costly is rendered available by the MISC invention.

BRIEF DESCRIPTION OF THE DRAWINGS

Fig. 1 is a block diagram illustrating a single integrated circuit employing the MISC architecture of the instant invention;

Fig. 2 is a block diagram illustrating a single integrated circuit employing a "systolic" variant of the MISC architecture shown in Fig. 1; and

Fig. 3 is a block diagram illustrating a single integrated circuit employing a "custom control" variant of the MISC architecture shown in Fig. 1.

DESCRIPTION OF ILLUSTRATIVE EMBODIMENT

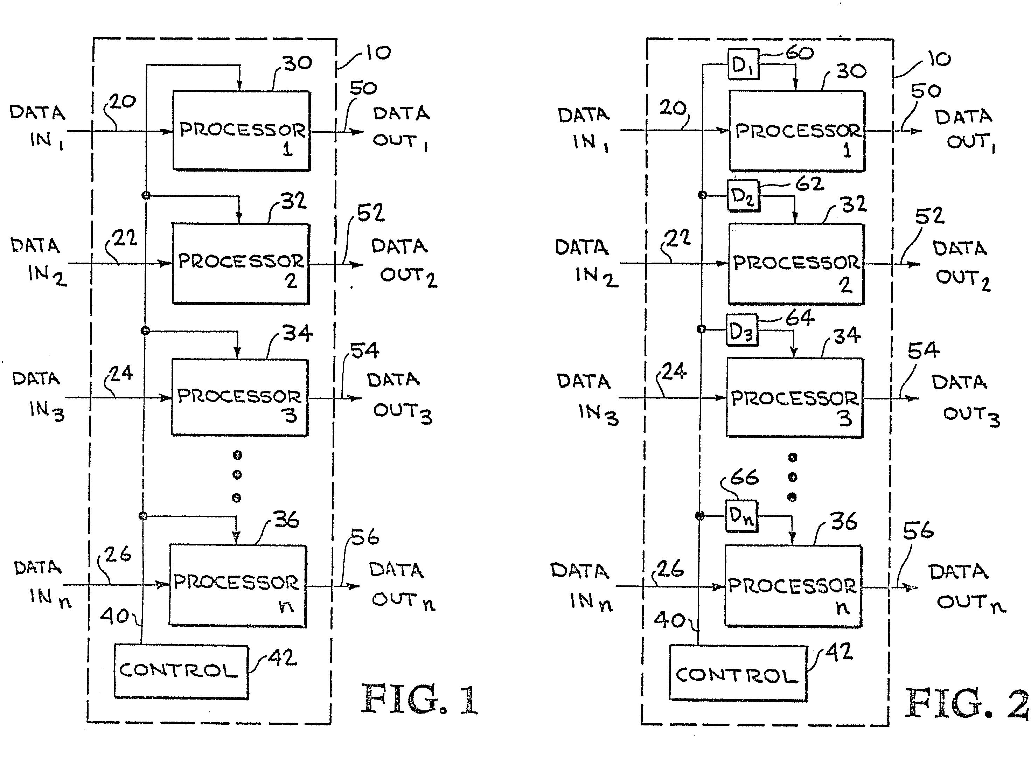

One embodiment of the multiple intelligence single control (MISC) architecture of the present invention is illustrated in block diagram form in Fig. 1. All elements shown in Fig. 1 could be incorporated onto a single monolithic integrated circuit chip 10. As shown in Fig. 1 a number of input data signals DATA_IN1, DATA_IN2, DATA_IN3, ..., DATA_INn, each of which could be analog or digital in nature, are conducted via respective input signal lines 20, 22, 24, ..., 26, to respective data-processors 30, 32, 34, ..., 36 contained within chip 10. Of course, in a particular application, a number of the data-processors could be connected to a single signal line in the case of time-division multiplexed (TDM) signals, or alternatively, a number of signal lines could be connected to a single data processor.

Each data-processor 30, 32, 34, ..., 36 is connected via signal line 40 to a control block 42, which is contained within chip 10. Control 42 may be, for example, a programmed logic array (PLA), capable of generating signals on line 40 which provide control signals for the data-processors 30, 32, 34, ..., 36. In this way, the control and data-processing functions are separated in the architecture illustrated in Fig. 1, thereby avoiding the duplication of control elements, reducing the die area of the chip 10 and the number of interconnections, and improving reliability of chip 10. For purposes of illustration, each signal line in Fig. 1 is shown as being single-conductor. However, it is undertood that multiple-conductor signal lines could be used instead so that a number of signals could be carried in parallel and processed by each data-processor in the case of line 20, 22, 24, 26 and 28, or used to provide parallel control signals in the case of line 42.

Each data-processor 30, 32, 34, ..., 36 shown in Fig. 1 simultaneously executes the same series of operations which

result from control 42 executing a straight-line set of data-independent instructions and generating therefrom a series of control signals on line 40. Each data-processor 30, 32, 34,..., 36 receives the signals DATA_IN1, DATA_IN2, ..., DATA_INn on signal lines 20, 22, 24, ..., 26, respectively and generates therefrom signals DATA_OUT1, DATA_OUT2, DATA_OUT3, ..., DATA_OUTn on output signal lines 50, 52, 54, ..., 56, respectively, by performing the above-mentioned series of operations generated by control 42. Of course, in a particular application, a single data-processor may be connected to a number of output signal lines, or alternatively, a number of data-processors could be connected to a single output line in the case of TDM signals.

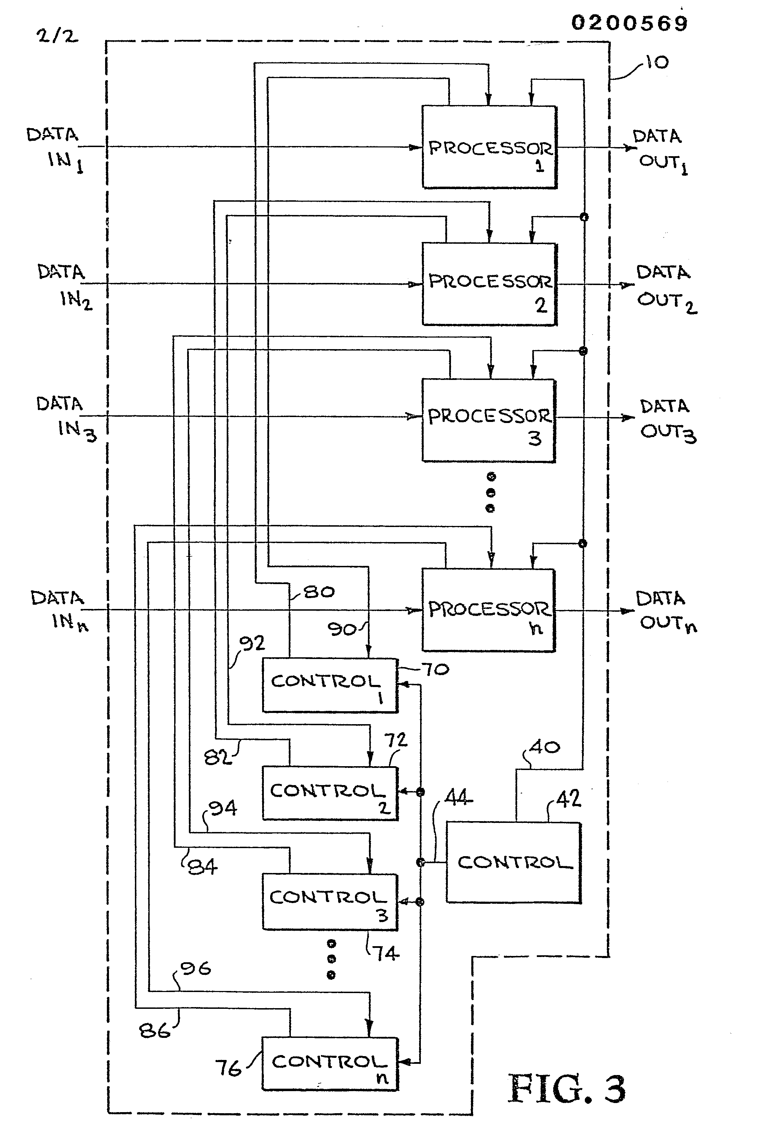

An alternative embodiment utilizing the MISC invention is illustrated in Fig. 2 in which a delay element is placed into the control path leading from control 42 to the data-processors 30, 32, 34, ..., 36. (Numerals designating like element in both Fig. 1 and Fig. 2 are the same.) As shown in Fig. 2, each data-processor 30, 32, 34, ..., 36 has a respective delay latch 60, 62, 64, ..., 66 included in the control path 40 from control 42. In the embodiment shown in Fig. 1, if the input signals DATA_IN1, DATA_IN2, DATA_IN3, ..., DATA_INn are derived from a time-division multiplexed (TDM) bit stream in which DATA_INi is in the ith time division, $1 < i < n$, then a relatively long wait may be imposed before the nth time division arrives before simultaneous processing by all n data-processors can begin. However, in the embodiment shown in Fig. 2, latch elements 60, 62, 64, ..., 66 provide progressively increasing control signal delay so that the DATA_INi input to data-processor i has been received before the control signals previously generated by control 42 are received and the data-processor performs the series of operations on the data from the ith time-division. In this "systolic" manner, no overall time penalty is imposed by the architecture shown in Fig. 2 while awaiting data to arrive.

A second alternative embodiment utilizing the MISC invention is illustrated in Fig. 3 in which the control 42 is augmented by a set of custom control elements 70, 72, 74, ..., 76, which perform a customized control operation for the respective data-processor 30, 32, 34, ..., 36. (Numerals designating like elements in both Fig. 1 and Fig. 3 are the same.) Each custom control receives a signal from control 42 via signal line 44 and generates therefrom individualized control signals to its respective data-processor 30, 32, 34, ..., 36 via signal lines 80, 82, 84, ..., 86, respectively. In this manner, the straight-line set of data-independent instructions executed by the control 42 can be modified. In addition, the custom control 70, 72, 74, ..., 76 receive via respective signal lines 90, 92, 94, ..., 96, data-dependent signals generated by respective processors 30, 32, 34, ..., 36 which can cause the respective custom control to modify the customized straight-line instructions executed by the control 42, so that a certain amount of data-dependency can be implemented by the MISC variation of Fig. 3.

CLAIMS

1. A monolithic integrated circuit device receiving in parallel a plurality of input signals and generating therefrom in parallel a plurality of output signals, said monolithic device comprising:

control means responsive to a set of data-independent instructions for generating therefrom control signals; and

a plurality of signal processing means, each responsive to said control signals and to predetermined ones of said input signals, for performing thereon operations corresponding to said control signals and for generating thereby predetermined ones of said output signals;

whereby all said signal processing means simultaneously perform identical operations.

2. A monolithic integrated circuit device receiving in parallel a plurality of input signals and generating therefrom in parallel a plurality of output signals, said monolithic device comprising:

control means responsive to a set of data-independent instructions for generating therefrom control signals;

a plurality of means responsive to said control signals for generating therefrom said control signal delayed in time; and

a plurality of signal processing means, each responsive to a predetermined one of said delayed control signals and to predetermined ones of said input signals, for performing thereon operations corresponding to said delayed control signals and for generating thereby predetermined ones of said output signals;

whereby each said signal processing means performs identical operations delayed in time until reception of said delayed control signal.

3. A monolithic integrated circuit according to claim 2 wherein each of said plurality of input signals correspond to a predetermined time-division slot of a time-division multiplexed serial signal having a given total number of time-division slots, and wherein said delay means introduces a delay in the proportion of said corresponding time-division slot to said total number of time-division slots.

4. A monolithic integrated circuit device receiving in parallel a plurality of input signals and generating therefrom in parallel a plurality of output signals, said monolithic device comprising:

first control means responsive to a set of data-independent instructions for generating therefrom first and second control signals;

a plurality of signal processing means, each responsive to said first control signals and to predetermined ones of said input signals, for performing thereon operations corresponding to said first control signals and for generating thereby predetermined ones of said output signals and for generating therefrom third control signals;

a plurality of second control means each responsive to said second control signals and to said third control signals for generating therefrom fourth control signals;

whereby each said signal processing means performs operations responsive to said data-independent first control signals and is further responsive to a predetermined one of said data-dependent fourth control signals.

5. A monolithic integrated circuit device receiving in parallel a plurality of input signals and generating therefrom in parallel a plurality of output signals, said monolithic device comprising:

first control means responsive to a set of data-independent instructions for generating therefrom first and second control signals;

a plurality of means responsive to said first control signals for generating therefrom said first control signals delayed in time;

a plurality of signal processing means, each responsive to said delayed first control signals and to predetermined ones of said input signals, for performing thereon operations corresponding to said first control signals and for generating thereby predetermined ones of said output signals and for generating therefrom third control signals;

a plurality of second control means each responsive to said second control signals and to said third control signals for generating therefrom fourth control signals;

whereby each said signal processing means performs operations responsive to said data-independent delayed first control signals and is further responsive to a predetermined one of said data-dependent fourth control signals.

6. A monolithic integrated circuit according to claim 5 wherein each of said plurality of input signals correspond to a predetermined time-division slot of a time-division multiplexed serial signal having a given total number of time-division slots, and wherein said delay means introduces a delay in the proportion of said corresponding time-division slot to said total number of time-division slots.

FIG. 1

FIG. 2

1/2

0200569

FIG. 3